# EUROPÄISCHE PATENTANMELDUNG

(11) **EP 2 420 373 A2**
(43) Veröffentlichungstag der Anmeldung: **22.02.2012**
(21) Anmeldenummer: 11178045.8
(22) Anmeldetag: 19.08.2011
(51) Int. Cl.: B29C 44/24, B29C 47/06, B65D 85/78

(54) **Verfahren zur Herstellung eines opaken Formteils**

(30) Priorität: 20.08.2010 AT 13982010
(71) Anmelder: Rundpack AG, 9444 Diepoldsau (CH)
(72) Erfinder: Huth, Kurt Werner, 86399 Bobingen (DE); Weiermair, Georg, 4553 Inzersdorf (AT)
(74) Vertreter: Burger, Hannes

(57) **Zusammenfassung**

Ein Formteil, dadurch gekennzeichnet, dass es eine Wand mit zumindest einer geschäumten Schicht aus zumindest einem Polymer (2) und/oder Copolymer aufweist, und der geschäumten Schicht zumindest ein mineralischer und/oder organischer Füllstoff (3) beigemengt ist, wobei der Anteil des Füllstoffes an der geschäumten Schicht über 10 Gewichtsprozent bezogen auf das Gesamtgewicht der geschäumten Schicht beträgt und an die geschäumte Schicht zumindest eine Deckschicht anschließt, oder dass die Wand nur aus der zumindest ein Polymer und/oder Copolymer aufweisenden, geschäumten und im Ausmaß von über 10 Gewichtsprozent Füllstoff enthaltenden Schicht gebildet wird, wobei die geschäumte Schicht im Fall eines durch Blasformen hergestellten Formteils einen Füllstoffanteil von über 30 Gew. % aufweist.

## Beschreibung

Die Erfindung betrifft ein Formteil.

Opake, also nicht durchsichtige, Kunststoffformteile bzw. Folien finden in vielen Bereichen Verwendung. Von besonderer Bedeutung sind derartige Kunststoffformteile oder Folien jedoch im Bereich der Verpackung von Lebensmitteln, beispielsweise in der Form von Joghurtbechern, Getränken oder als Verpackungen für Tiefkühlprodukte.

Ein Weg das Gewicht einer thermisch formbaren Bahn zu reduzieren, ist es ein Treibmittel einzuarbeiten, um eine geschäumte Bahn mit niedriger Dichte herzustellen. Eine geschäumte Bahn diesen Typs wird typischerweise unter Verwendung einer konventionellen Extrusionsbahn für Bahnen und eines chemischen Treibmittels hergestellt. Chemische Treibmittel sind jedoch teuer und stellen kein konsistentes oder einheitliches Schäumen bereit, was zu Variationen bei der Schaumstärke und -dichte innerhalb der hergestellten geschäumten Bahn führt, wobei ein aus drei Walzen bestehender Polierstapel extrudiert wird und entweder aufgewickelt, oder direkt in ein thermoformendes Verfahren überführt wird. Ökologische Einflüsse bewegen die Nahrungsmittelverpackungsindustrie jedoch dazu leichtere Verpackungsmaterialien herzustellen, aufgrund der Gebühren, die sich auf das Verpackungsgewicht beziehen, welche auf Verarbeiter verpackter Nahrungsmittel angewendet werden, wobei hier das wesentliche die Senkung des petrochemischen Anteils darstellt.

Daher verbleibt eine Notwendigkeit für ein Verfahren zum Herstellen geschäumter Verpackungsmaterialien mit niedriger Dichte, insbesondere einer thermisch formbaren geschäumten Bahn mit konsistenter Stärke und Dichte, welche für traditionelle Anwendungen nicht geschäumter Materialien wie z.B. Behältern für Molkereiprodukte, verwendet werden können.

Die US 5,342,560 offenbart ein Verfahren zum Herstellen eines mehrlagigen Sandwichs aus einem Polystyrolfilm und einem nicht geschäumten Film, der aus einer Düse extrudiert, expandiert und gekühlt wird. Die US 53871897 offenbart eine Tapete, die aus einem offenzelligen geschäumten Olefinpolymerfilm besteht.

Die DE 60123026 betrifft ein Verfahren zur Herstellung einer Bahn aus thermoplastischem Schaum, umfassend: das In-Kontakt-Bringen eines geschmolzenen Polymers von aromatischen Vinylidenmonomeren oder olefinischen Monomeren mit einem physikalischen Treibmittel, um eine Polymer/Treibmittel-Mischung innerhalb einer Extrusionsbahn für Bahnen zu bilden, Extrudieren und Aufschäumen der Mischung aus einer Breitschlitzdüse in einen Bereich mit niedrigerem Druck, um ein schäumendes Extrudat zu bilden, und

Ziehen und Zusammendrücken des schäumenden Extrudats, um eine Schaumbahn mit einer einheitlichen Dicke zu bilden, die an jedem Punkt von der mittleren Bahnendicke um weniger als 6% abweicht. Das Verfahren ist insbesondere geeignet zur Herstellung geschäumter Verpackungsmaterialien mit hoher Dichte insbesondere thermisch formbarer Schaumbahnen mit einer konsistenten Stärke und Dichte, die für traditionelle Anwendungen nicht geschäumter thermisch geformter Materialien verwendet werden können, wie z.B. Behälter für Molkereiprodukte.

Das Treibmittel, das in dem Verfahren verwendet wird, schließt jedes physikalische Treibmittel ein, einschließlich, nicht jedoch beschränkt auf Kohlendioxid (CO₂), Stickstoff (N₂), Wasser (H₂O) oder Kombinationen daraus.

Additive, wie z.B. Pigmente und/oder Kern(Keim)bildner können in dem Verfahren der vorliegenden Erfindung ebenfalls verwendet werden.

Aus EP-A 484816 und EP-A 484 817 sind heißsiegelfähige Verpackungsfolien bekannt. Die beschriebenen Folien bestehen aus einer Polypropylenbasisschicht und mindestens einer Deckschicht aus einem Propylenpolymeren, wobei die Basisschicht aus einem isotaktischen Polypropylen und die Deckschicht aus einem Copolymeren eines a-Olefins mit 2 bis 8 C-Atomen mit syndiotaktischem Propylen aufgebaut ist.

Aus der EP-A 589 213 ist eine siegelbare Polypropylen-Mehrschichtfolie und ein Verfahren zu ihrer Herstellung sowie Verwendung bekannt geworden. Die Mehrschichtfolie umfasst mindestens eine Basisschicht, die überwiegend Polypropylen enthält, und mindestens eine Deckschicht. Die Deckschicht ist siegelfähig und enthält ein isotaktisches Homopolymerisat eines Olefins.

Aus Joachim Nentwig, Kunststoff- Folien: Herstellung, Eigenschaften Anwendungen, Carl Hanser Verlag, München, Wien, 1994, geht eine umfassende Darstellung des Standes der Technik der Kunststoff-Folien hervor.

Die DE 19548788 beschreibt Ein- oder Mehrschichtfolien die mindestens eine Polyolermformmasse mit mindestens einem Polyolerm enthalten. Das Polyolefin leitet sich von mindestens einem Olefin mit mindestens 2 C-Atomen der Formel Ra—CH=CH—Rb ab. Ra und Rb sind gleich oder verschieden und ein Wasserstoffatom oder Kohlenstoffatom bedeuten einen gradkettigen oder verzweigten CI —C15-Alkylrest, oder Ra und Rb bilden mit den sie verbindenden Atomen einen Ring oder ein Ringsystem. Das Polyolefin wird durch Polymerisation mit mindestens einem Metallocenkatalysator hergestellt.

Die DE 1745005 betrifft ein Verfahren zur Herstellung von Folien oder Platten aus Copolymer-Schaumstoff.

In den verwandten britischen Patentanmeldungen 18 329/65 und 2 281/66 wird ein Verfahren beschrieben, das darin besteht, dass eine Mischung aus Styrol und Maleinsäureanhydrid bei erzwungener Vorwärtsbewegung der Mischung copolymerisiert wird, dass dieser Mischung vor oder während der Polymerisation oder dem daraus gebildeten Copolymer ein Treibmittel zugegeben wird und dass das entstehende Produkt durch eine derartige Düse gepresst wird, dass es zu einer Folie oder Platte aus Copolymer-Schaumstoff geformt wird. Beim bevorzugten Verfahren wird die Reaktion in einem Extruder durchgeführt, da hierdurch eine zweckmässige Verfahrensweise gegeben ist. Ein Extruder ist aber ein verhältnismässig kostspieliger Apparat, und es ist Ziel des Patentes DE1745005, den Extruder am wirtschaftlichsten auszunutzen.

Gemäß DE1745005 wird ein Verfahren zur Herstellung von Folien oder Platten aus Copolymer-Schaumstoff vorgeschlagen, das darin besteht, dass eine copolymere Masse und ein Treibmittel durch eine folien- oder plattenbildende Düse extrudiert wird, wobei die copolymere Masse dadurch hergestellt wird, dass eine Lösung von den monomeren Bestandteilen bestehend aus Styrol und Maleinsäureanhydrid in einer Flüssigkeit gebildet wird, die ein Lösungsmittel für die monomeren Bestandteile darstellt und keine hemmende Wirkung auf die Copolymerisation ausübt, dass die Copolymerisation durchgeführt wird und dass mindestens ein Teil der Flüssigkeit von der entstehenden copolymeren Masse bei der erzwungenen Vorwärtsbewegung derselben in einem Extruder mit Dampfabzug bewegt wird.

Die DE69818786 betrifft eine Vorrichtung zur Herstellung einer thermoplastischen Schaumstofffolie, die das Aufschäumen unter vermindertem Druck ausführt.

Als herkömmliches Verfahren zur Herstellung einer thermoplastischen Schaumstofffolie (nachstehend manchmal einfach als "Folie" bezeichnet) war bisher ein Herstellungsverfahren bekannt, wobei ein Thermoplast und ein Treibmittel in einem Extruder geschmolzen und verknetet und durch ein Mundstück in einen unter Unterdruck stehenden Raum extrudiert werden. Wenn man durch dieses Herstellungsverfahren eine hochverschäumte Folie erhalten möchte, treten jedoch die Schwierigkeiten auf, dass eine große Menge Treibmittel benötigt wird und das mit der Ausdehnung der Folie die Zellen gröber werden, wodurch die Festigkeit der Folie beeinträchtigt wird.

Als Verfahren, bei dem diese Schwierigkeiten gelöst sind, ist ein Verfahren angewandt worden, wobei man den von einem Extruder stranggepreßten schaumigen Thermoplast ein Vakuumsystem durchlaufen lässt, so dass der schaumige Thermoplast weiter expandiert wird.

Zum Beispiel offenbart die japanische Patentoffenlegungsschrift Nr. 54215/1990 (Tokukohei 2-54215) (JP-A-1 639 854) eine Anordnung, in der eine walzenähnliche Abziehvorrichtung in einer Vakuumkammer installiert ist, so dass das folienähnliche schaumige Thermoplastmaterial durch ein Mundstück zur Expansion in die Vakuumkammer extrudiert wird und das so verschäumte Material durch die Abziehvorrichtung transportiert wird.

Die geprüfte japanische Patentveröffentlichung 29328/1983 (JP-A-1 199 174) offenbart eine Anordnung, in der ein Dichtungselement, das eine Druckminderung in einer Vakuumkammer sicherstellen soll, an einem Auslass der Vakuumkammer vorgesehen ist und hinter der Vakuumkammer eine walzenähnliche Abziehvorrichtung installiert ist, um ein folienähnliches schaumiges Thermoplastmaterial zu transportieren, das durch ein Mundstück in die Vakuumkammer extrudiert wird und dadurch expandiert.

Übrigens wird in der vorliegenden Patentbeschreibung ein Thermoplast, der in einer ersten Expansionsstufe bei Unterdruck aufgeschäumt wird, als "schaumiger Thermoplast" bezeichnet, und der Thermoplastschaumstoff, der bei Unterdruck weiter zu einem vollständig expandierten Zustand aufgeschäumt wird, den man nach oder unmittelbar vor dem Aushärten erhält, wird als "geschäumter Thermoplast" bzw. "Thermoplastschaumstoff "bezeichnet. Ein Thermoplast in einem Zustand während des Aufschäumens bzw. der Expansion bei Unterdruck ist als der erstere "schaumige Thermoplast" einzustufen.

Durch die oben beschriebenen herkömmlichen Anordnungen werden Thermoplastschaumstofffolien mit nur einer Dicke erzeugt. Um daher Thermoplastschaumstofffolien mit verschiedenen Dicken herzustellen, muss für jede Dicke eine getrennte Fertigungsvorrichtung bereitgestellt werden.

Die durch Tokukohei 2-54215 offenbarte Fertigungsvorrichtung hat jedoch den Nachteil, dass die Installation der Abziehvorrichtung in der Vakuumkammer dazu führt, dass die Abdichtungsvorrichtung in der Vakuumkammer kompliziert wird und die Fertigungsvorrichtung sperriger macht.

Da ferner im Hinblick auf das von Tokukosho 58-29328 offenbarte Herstellungsverfahren die Schaumstofffolie beim Transport durch die Abziehvorrichtung an das Dichtungselement am Auslass der Fertigungsvorrichtung anstößt, werden Zellen in der Schaumstofffolie zerquetscht und Narben an den Oberflächen der Folie erzeugt. Zu beachten ist, dass der Nachteil des Zerquetschens von Zellen der Schaumstofffolie im Fall von Tokukohei 2-54215 auffallender ist.

Einige herkömmliche Vorrichtungen werden in DE-A-2 904 720 und EP-A-O 002 489 beschrieben. DE-A-2 904 720 offenbart eine Vorrichtung gemäß dem Oberbegriff von Anspruch 1 zur Herstellung einer Thermoplastschaumstoffolie. EP-A-O 002 489 beschreibt ein Verfahren und eine Vorrichtung zum Formen von thermoplastischen Schaumstoffen mit vergrößerter Querschnittsfläche.

DE69818786 beschreibt eine Vorrichtung zur Herstellung einer Thermoplastschaumstofffolie, die in der Lage ist, Thermoplastschaumstofffolien mit verschiedenen Dicken herzustellen. DE69818786 weist auf: (i) einen Extruder zum Schmelzen und Verkneten eines Thermoplasts und eines Treibmittels zu einem geschmolzenen, verkneteten Gemisch und zum Extrudieren des geschmolzenen, verkneteten Gemischs, (ii) ein Mundstück an einem vorderen Ende des Extruders, um das geschmolzene, verknetete Gemisch zu einem folienähnlichen schaumigen Thermoplastmaterial zu formen, (iii) eine Vakuumkammer, in die das schaumige Thermoplastmaterial durch das Mundstück extrudiert und unter vermindertem Druck expandiert bzw. aufgeschäumt werden kann, und (iv) einen Abschnitt mit gegenüberliegenden Wänden, der sich aus einem Paar Wänden der Vakuumkammer zusammensetzt, die einander in Dickenrichtung des schaumigen Thermoplastmaterials gegenüberliegen, wobei mindestens eine der Wände eine bewegliche Wand ist, die so installiert ist, dass sie sich in Richtungen bewegt, in denen sich die Wände annähern und voneinander entfernen. Die Vakuumkammer weist eine Vakuumöffnung mit einem Durchmesser von 20 mm oder weniger auf, um den Druck innerhalb der Vakuumkammer zu vermindern.

Mit der vorstehenden Anordnung wird das geschmolzene, verknetete Gemisch aus dem Thermoplast und dem Treibmittel durch einen Extrusionsvorgang vom Extruder durch das Mundstück extrudiert und wird dadurch zu einem folienähnlichen schaumigen Thermoplastmaterial. Das folienähnliche Thermoplastmaterial dehnt sich unter vermindertem Druck in der Vakuumkammer weiter aus und wird dadurch zu der Thermoplastschaumstofffolie.

Bei der Herstellung von Kunststoffformteilen besteht auch das Problem, dass unterschiedliche Polymere bzw. Copolymere unterschiedliche Eigenschaften hinsichtlich ihres Materialschwundes im Rahmen des Verarbeitungsprozesses aufweisen. Dies kann zur Folge haben, dass bei Verwendung einer anderen Materialzusammensetzung die verwendeten Werkzeuge bzw. Formen entsprechend angepasst werden müssten. Zum anderen ist es auch erforderlich, die gewünschten Steifigkeiten des Kunststoffformteils unabhängig von dem verwendeten Material stets einzuhalten.

Es ist daher eine Aufgabe der Erfindung, die Möglichkeit zu schaffen, den Materialschwund auf ein unabhängig von dem verwendeten Polymer und/oder Copolymers einheitliches Maß zu verringern und die Einhaltung der erforderlichen Steifigkeitswerte des fertigen Produktes zu gewährleisten.

Diese Aufgabe wird mit einem Formteil der eingangs genannten Art erfindungsgemäß dadurch gelöst, dass es eine Wand mit zumindest einer geschäumten Schicht aus zumindest einem Polymer und/oder Copolymer aufweist, und der geschäumten Schicht zumindest ein mineralischer und/oder organischer Füllstoff beigemengt ist, wobei der Anteil des Füllstoffes an der geschäumten Schicht über 10 Gewichtsprozent bezogen auf das Gesamtgewicht der geschäumten Schicht beträgt und an die geschäumte Schicht zumindest eine Deckschicht anschließt, oder dass die Wand nur aus der zumindest ein Polymer und/oder Copolymer aufweisenden, geschäumten und im Ausmaß von über 10 Gewichtsprozent Füllstoff enthaltenden Schicht gebildet wird, wobei die geschäumte Schicht im Fall eines durch Blasformen hergestellten Formteils einen Füllstoffanteil von über 30 Gew. % aufweist.

Unter dem Begriff Stegschicht wird in diesem Dokument eine geschäumte Schicht verstanden, welche eine Kernschicht oder Trägerschicht eines mehrschichtigen Schichtaufbaus darstellt.

Unter den Begriffen "auf etwas anbringen" und "anschließend" wird in diesem Dokument sowohl eine Anordnung verstanden welche eine unmittelbare Berührung der als aufeinander aufgebrachten bzw. aneinander anschließenden Schichten als auch die Anordnung weiterer Schichten und Materialien zwischen diesen Schichten vorsieht. Weiters sei darauf hingewiesen, dass als Deckschicht in diesem Dokument sowohl eine äußere Schicht als auch eine direkt bzw. unmittelbar an die Stegschicht bzw. geschäumte Kernschicht anschließende Schicht bedeuten kann. Auch können zwischen der Deckschicht und der Stegschicht noch weitere Schichten angeordnet sein.

Weiters wird mit dem Begriff "opak" in diesem Dokument ein Stoff mit einem Transmissionsgrad T gekennzeichnet, für den gilt: 0 ≤ T < 1, insbesondere 0 ≤ T << 1, beispielsweise < 0,5.

Die Begriffe Kunststoffformteil und Formteil werden in diesem Dokument synonym verwendet. Der Begriff Formteil soll den Begriff Kunststoffformteil ersetzten, wenn Biopolymere zur Herstellung verwendet werden. Sinngemäß gilt das gleiche für die Begriffe Kunststofffolie und Folie.

Vorteilhafte Weiterbildungen der Erfindung sind in den Unteransprüchen angegeben.

Durch Zugabe von Füllmaterial, beispielsweise anorganischem oder organischem Füllmaterial die Materialschwundeigenschaften der geschäumten Schicht auf einfache Weise an einen Vorgabewert angepasst werden. So kann beispielsweise bei Verwendung von Polypropylen anstelle von Styrol als Ausgangspolymer durch Zugabe von ca. 60 Gewichtsprozent CaCO₃ die Schwundeigenschaften dieses Gemisches beim Extrudieren an die Schwundeigenschaften von Styrol angepasst werden, sodass auch die gleichen Werkzeuge verwendet werden können. Da sich durch die Zugabe von Füllstoffen aber auch das Gesamtgewicht der erzeugten Kunststoffformteile erhöhen würde, was in vielen Fällen, beispielsweise bei der Herstellung von Joghurtbechern unerwünscht ist, wäre es erforderlich, die Wandstärken der Kunststoffformteile zu reduzieren. Dies hätte jedoch auch eine Reduktion der Steifigkeit zur Folge. Um dies zu vermeiden, ist gemäß der Erfindung vorgesehen, die Wandstärke der Stegschicht bzw. Kernschicht durch Aufschäumen zu erhöhen, sodass sich die Dichte der Stegschicht bzw. Kernschicht reduziert aber die Wandstärke zunimmt. Da die Steifigkeit eine Funktion der Wandstärke und des Elastizitätsmoduls ist - die Wandstärke geht mit ihrer dritten Potenz in die Berechnung der Steifigkeit ein, kann durch die erfindungsgemäße Erhöhung der Wandstärke und durch Zugabe der Füllstoffe bei im wesentlichen gleich bleibendem Gewicht gegenüber einem herkömmlichen Kunststoffformteil die gewünschte Steifigkeit erzielt werden.

Als besonders vorteilhaft hat es sich herausgestellt, dass der Mischung zur Herstellung der Stegschicht vor oder während des Extrudierens ein Anteil von über 10 Gewichtsprozent, beispielsweise 30 Gewichtsprozent, bevorzugterweise zumindest 60 Gewichtsprozent, an anorganischem und/oder organischem Füllstoff, insbesondere Kalziumcarbonat, beigemengt wird.

Eine kostengünstige Variante, welche auch unter einem ökologischen Aspekt sehr günstig erscheint, sieht vor, dass der Mischung zur Herstellung der Stegschicht vor oder während des Extrudierens ein Anteil von über 10 Gewichtsprozent Mahlmaterial, welches durch Mahlen von Material, welches bereits zur Herstellung von derartigen Kunststoffformteilen oder Folien verwendet wurde besteht.

Um eine Anpassung der Steifigkeitseigenschaften an die Materialzusammensetzung zu erzielen, kann die Stegschicht in Abhängigkeit von dem Gewicht des Füllmaterials auf eine vorgebbare Dicke aufgeschäumt werden.

Eine besonders vorteilhafte Variante der Erfindung sieht vor, dass als Füllstoff zumindest ein Zeolith verwendet wird. Dies ermöglicht, die Speicherung des Treibmittels in einer aus dem Zeolith gebildeten Matrix und die Freisetzung des Treibmittels durch thermischen Einfluss, beispielsweise durch gezieltes Erhitzen in dem Extruder.

Es hat sich als günstig herausgestellt, wenn die zumindest eine Deckschicht aus zumindest einem Polymer und /oder Copolymer besteht. Dadurch kann ein Schichtaufbau erzielt werden, bei welchem an einer relativ dicken Stegschicht eine oder mehrere dünne Deckschichten anschließen. Hierbei ist es besonders vorteilhaft, wenn die Herstellung der Stegschicht und der Deckschicht in getrennten Extrudern erfolgt.

Eine sehr vorteilhafte Variante sieht vor, dass die zumindest eine Deckschicht mittels zumindest einer über oder unter zumindest einer Düse zur Ausbringung der Stegschicht vorgesehenen Düse auf die Stegschicht aufgebracht wird. Gemäß einer günstigen Ausführungsform kann die zumindest eine Deckschicht mittels Curtain Coatings auf die Stegschicht aufgebracht werden.

Gemäß einer weiteren Variante der Erfindung kann die zumindest eine Deckschicht in einer Schichtdicke, welche weniger als der Hälfte der Schichtdicke der Stegschicht entspricht, auf die Stegschicht aufgetragen werden.

Entsprechend einer ebenfalls sehr vorteilhaften Variante der Erfindung kann als Treibmittel ein in zumindest einer an die Stegschicht angrenzenden Schicht lösliches Mittel verwendet werden. Auf diese Weise lässt sich sehr einfach eine eventuell unerwünschte Blasenbildung in einer an die Stegschicht anschließenden Schicht, beispielsweise einer Deckschicht oder einer Klebeschicht, verhindern.

Alternativ zu einem Aufbringen der Deckschicht mittels Düsen oder Aufspritzen kann die Deckschicht auf die Stegschicht auch mittels eines Klebemittels aufgeklebt werden. In diesem

Fall könnte heißes Klebemittel, beispielsweise EVA oder andere geeignete Kleber, in einem Extruder verflüssigt und erhitzt und auf die Stegschicht aufgespritzt werden. Als besonders günstig hat sich in diesem Zusammenhang herausgestellt, wenn das Klebemittel auf die Stegschicht mittels zumindest einer Düse aufgesprüht, insbesondere mittels Curtain Coating, aufgebracht wird.

Um eine unerwünschte Blasenbildung in dem Klebemittel zu vermeiden ist es von Vorteil, wenn das Treibmittel in dem Klebemittel löslich ist, wobei als Klebemittel bevorzugterweise EVA und als Treibmittel bevorzugterweise Stickstoff verwendet wird.

Eine weitere besonders geeignete Methode zur Herstellung des Kunststoffformteils besteht darin, dass der Kunststoffformteil mittels Extrusionsblasformung hergestellt wird.

Bei dem oben genannten Verfahren kommen bevorzugterweise als Polymer oder Copoylmer Styrol, Polystyrol, Polypropylen oder PET und/oder eine Mischung dieser Materialien zum Einsatz.

Ein auch besonders vorteilhafter Aufbau, zeichnet sich dadurch aus, dass die Stegschicht zumindest abschnittsweise mit einer Manschette als Deckschicht umgeben wird.

Gemäß einer bevorzugten Weiterbildung der Erfindung weist die Manschette in einem Querschnitt einen geschlossenen Ring um den Kunststoffformteil bildet.

Eine in besonders ästhetischer Hinsicht vorteilhafte Variante der Erfindung, die auch ein Bedrucken oder eine besondere Farbgebung der Manschette ermöglicht sieht vor, dass die Manschette aus Kunststoff oder Zellulose oder einem Gewebe gebildet ist.

Zur Herstellung der Stegschicht bzw. Kernschicht und/oder einer Schicht oder Schichten, welche nicht direkt mit einem Füllgut in Kontakt stehen, können Mahlgut und/oder Regranulat eingesetzt werden.

Weiters können zur Herstellung der Stegschicht bzw. Kernschicht und/oder Schichten, welche nicht direkt mit einem Füllgut in Kontakt stehen, Mahlgut verwendet werden und Regranulat in einer oder mehreren beliebigen Schichten zum Einsatz kommen.

Eine vorteilhafte Variante der Erfindung sieht vor, dass die Deckschicht aus einer den Formteil zumindest abschnittsweise umgebenden Manschette gebildet ist, welche insbesondere aus einem Zellstoff, Kunststoff und/oder Gewebe gebildet ist. Gemäß einer Weiterbildung obiger Ausführungsform kann es vorgesehen sein, dass die Manschette in einem Querschnitt einen geschlossenen Ring um den Formteil bildet.

Gemäß einer weiteren Variante der Erfindung kann die zumindest eine Deckschicht eine Sperrschicht, insbesondere eine gasdichte Sperrschicht, beispielsweise für Sauerstoff, bilden.

Auch kann es vorgesehen sein, dass an beide Hauptoberflächen der Stegschicht je zumindest eine Deckschicht anschließt. Auf diese Weise lässt sich eine besonders hohe Steifigkeit des Wandaufbaus erzielen.

Eine in hygienischer Sicht besonders vorteilhafte Variante der Erfindung sieht vor, dass zumindest eine mit einem Füllinhalt des Kunststoffformteils in Berührung kommende Deckschicht als säurebeständige Schicht ausgebildet ist. Günstigerweise ist der Kunststoffformteil als Kunststoffbecher, insbesondere als Joghurtbecher, ausgebildet.

Es kann auch eine chemisch und/oder physikalisch geschäumten Folie zur Herstellung des Formteils verwendet werden, welche mit zumindest einem mit mineralischen (CaC03, Talkum, Dolomit, Zeolith usw.) und/oder zumindest einem nachwachsenden Füll- bzw. Rohstoff (Holzmehl, -fasern, Sisal, Flachs, Hanf usw.) gefüllt ist.

Weiters kann eine geschäumte und gefüllte Mono- oder Coexfolie verwendet werden, welche eine geschlossene oder zumindest zu 70 % geschlossene Oberfläche aufweist.

Darüber hinaus kann auch eine Mehrschichtfolie verwendet werden, welche erfindungsgemäß sowohl aus ungefüllten geschäumten Einzelschichten als auch gefüllten, nicht geschäumten Einzelschichten bestehen kann.

Eine Variante der Mehrschichtfolie sieht vor, dass sie sowohl eine oder mehrere ungefüllte, geschäumte Einzelschichten oder mehrere gefüllte, nicht geschäumte Einzelschichten und/oder einer oder mehreren gefüllten und geschäumten Schichten umfasst.

Gemäß einer vorteilhaften Ausgestaltung weist eine aus in erster Linie auf Polypropylen basierenden Matrix bestehenden Flachfolie, welche ein- oder mehrlagig, geschäumten und mineralisch u. oder organisch gefüllt ist, eine Schwindung auf, welche jener von Polystyrol entspricht.

Entsprechend einer weiteren Ausführungsform kann eine Monofolie mit geschlossener Oberfläche verwendet werden. Geschlossene Oberfläche bedeutet, dass die Oberfläche nicht durch zerplatzte Blasen beschädigt ist.

Eine weitere Ausführungsform des erfindungsgemäßen Formteils sieht vor, dass er eine Wand mit einem 2-lagigen Schichtaufbau aus einer geschäumten und einer ungeschäumten Schicht aufweist, wobei die nicht geschäumte Schicht zwischen 5 - 60 % der gesamten Wandstärke aufweist.

Gemäß einer anderen, ebenfalls sehr vorteilhaften Variante der Erfindung ist es vorgesehen, dass die Wand des Formteils einen 3-lagigen Schichtaufbau aus einer geschäumten Stegschicht und zwei ungeschäumten Deckschichten aufweist, wobei die Schichtenverteilung sowohl symmetrisch als auch unsymmetrisch sein kann und die beiden nicht geschäumten äußeren Schichten zusammen 5 - 60 % der Gesamtwandstärke aufweisen

Darüber hinaus kann der Formteil eine äußere Antistatik- und/oder, Glanz-, und/oder Siegel und/oder, Haptik- und/oder, Farbschicht aufweisen.

Gemäß einer Ausführungsform der Erfindung kann es vorgesehen sein, dass eine Lebensmittelkontaktschicht keine mineralischen Füllstoffe außer gegebenenfalls einem Farbmasterbatch oder nur für den Lebensmittelkontakt geeignete Stoffe enthält und die Mittelschicht geschäumt und mit mineralischen u. oder organischen Füllstoffen gefüllt ist.

Falls der Wandaufbau des erfindungsgemäßen Formteils zweilagig ausgeführt ist, kann es vorgesehen sein, dass eine Lebensmittelkontaktschicht keine mineralischen Füllstoffe außer dem Farbmasterbatch oder nur für den Lebensmittelkontakt geeignete enthält und die zweite Schicht geschäumt und mit mineralischen u. oder organischen Füllstoffen gefüllt ist.

Auch im Fall eines mehrlagigen Wandaufbaus kann es vorgesehen sein, dass eine Lebensmittelkontaktschicht keine mineralischen Füllstoffe außer einem Farbmasterbatch oder nur für den Lebensmittelkontakt geeignete Stoffe enthält, die Mittelschicht geschäumt und mit mineralischen u. oder organischen Füllstoffen gefüllt ist und die außen liegende Schicht bzw. außen liegende zwei Schichten (Glanzschicht u. Deckschicht) nicht gefüllt und nicht geschäumt ist.

Günstigerweise weist der Formteil eine Sperrschicht (EVOH, PA usw.) auf, beispielsweise in Form einer Sauerstoff- u. oder CO₂ Barriere. So können bei einem Aufbau der erfindungsgemäßen Folie als Mehrschichtfolie eine und oder mehrere Schichten, eine spezielle Sauerstoffu. oder CO2 Barriere aufweisen.

Gemäß einer weiteren Ausführungsform kann die Oberfläche des Formteils auch ein Farbmuster aufweisen.

Entsprechend einer anderen Variante kann der Formteil zumindest eine funktionale Oberfläche aufweisen.

Eine besonders vorteilhafte Variante sieht vor, dass eine und oder mehrere Schichten, eine spezielle Sauerstoffbarriere vorgesehen sind und diese durch Zusatz von plättchenförmigen Füllstoffen gebildet ist. Gemäß einer anderen Ausführungsform der Erfindung kann die Sauerstoffbarriere durch Zusatz von O₂ Scavengern gebildet sein.

Weiteres kann vorgesehen werden, dass ein Kunststoffformteil welches zum überwiegenden Teil aus geschäumten Material besteht einen Rest des Formteils aus nicht geschäumten, durchsichtigen Material enthält.

Weiters kann vorgesehen sein, dass ein Kunststoffformteil welcher aus einer Folie hergestellt ist, durch Tiefziehen geformt wird und ein nach dem Tiefziehen nachfolgender Bearbeitungsschritt wie Beschichten, Coaten, Drucken, Sleeven usw. vorgesehen ist. In diesem Zusammenhang ist es besonders günstig, wenn nach einem Thermoformen eine Kartonummantelung aufgebracht wird oder die Kartonummantelung in einem "In Mold Labeling" Verfahren aufgebracht ist.

Die Erfindung samt weiteren Vorteilen wird im Folgenden anhand einiger nicht einschränkender Ausführungsbeispiele, welche in den Zeichnungen dargestellt sind, näher erläutert.

In diesen zeigen schematisch:
Fig. 1 eine erste Variante einer Vorrichtung zur Durchführung eines Verfahrens zur Herstellung einer Folie für einen Formteil;
Fig. 2 eine zweite Variante einer Vorrichtung zur Durchführung eines Verfahrens zur Herstellung einer Folie für einen Formteil und
Fig. 3 einen Querschnitt durch einen Wandaufbau einer zweiten Variante eines erfindungsgemäßen Kunststoffformteils bzw. einer Kunststofffolie.
Fig. 4 einen Querschnitt durch einen Wandaufbau einer ersten Variante eines erfindungsgemäßen Kunststoffformteils bzw. einer Kunststofffolie.
Fig. 5 einen erfindungsgemäßen Kunststoffformteil in Form eines ummantelten Bechers.

Einführend sei festgehalten, dass in den unterschiedlich beschriebenen Ausführungsformen gleiche oder ähnliche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

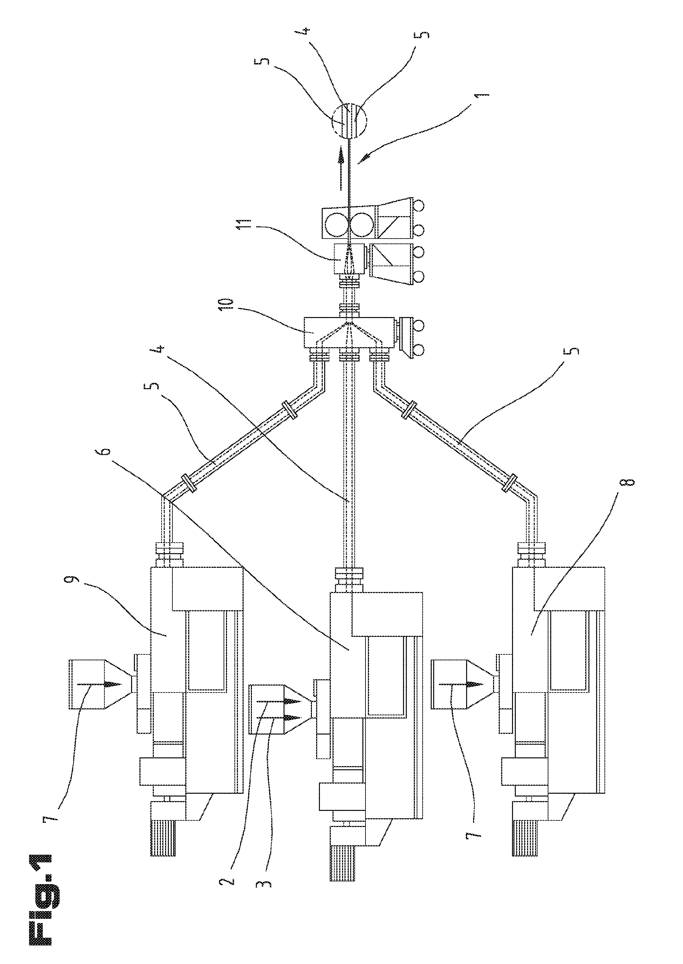

Gemäß Fig. 1 können bei einem Verfahren zur Herstellung eines opaken Kunststoffformteils oder einer opaken Kunststofffolie 1 aus einem oder mehreren Polymeren 2 und/oder Copolymeren dem Polymer 2 und/ oder dem Copolymer mindestens ein Füllstoff bzw. Füllmittel 3 sowie mindestens ein Treibmittel zugesetzt werden. Diese Mischung kann extrudiert und aufgeschäumt werden, um eine Kernschicht, der Folie 1 zu erzeugen. Diese Kernschicht wird im Folgenden als Stegschicht 4 bezeichnet. In den Ansprüchen ist die Stegschicht 4 als geschäumte Schicht bezeichnet. Auf diese geschäumte und gefüllte Stegschicht 4 kann dann in weiterer Folge zumindest eine Deckschicht 5 aufgebracht werden. Als Polymere oder Copoylmere können beispielsweise Styrol, Polystyrol, Polypropylen, Polyethylen, ABS (Acryl-Nitrin-Butandien-Styrol) oder PET, usw. und/oder eine Mischung dieser Materialien verwendet werden.

Als Füllmittel der Folie 1 bzw. des Kunststoffformteils eignen sich mineralischen Füllstoffe (CaC03, Talkum, Dolomit, Zeolith usw.) und/oder nachwachsende Füll- bzw. Rohstoffe (Holzmehl, -fasern, Sisal, Flachs, Hanf usw.).

Als Füllmittel 3 können beispielsweise Zeolithe verwendet werden. Dies eröffnet unter anderem die Möglichkeit, dass das zum Schäumen verwendete Treibmittel in einer aus dem Zeolith gebildeten Matrix gespeichert und durch thermischen Einfluss in dem Extruder 6 frei gesetzt werden kann. So kann sich bei Erhitzen von Zeolithen das enthaltene Kristallwasser spalten und durch die Wärmezufuhr verdampfen, was zum Aufschäumen des Polymers führt.

Die Deckschicht 5 kann beispielsweise ein Polymer und /oder Copolymer und/oder Siliziumoxyd, insbesondere Siliziumdioxid, aufweisen oder auch nur aus einem dieser Materialien bestehen bzw. hergestellt sein. Natürlich kann die Deckschicht 5 je nach Einsatzzweck und gewünschter Funktion auch aus anderen geeigneten Materialien hergestellt werden.

Der Mischung zur Herstellung der Stegschicht 4 kann vor oder während des Extrudierens beispielsweise ein Anteil über 10 Gewichtsprozent, beispielsweise 30 Gewichtsprozent oder 50 - 60 Gewichtsprozent, an anorganischem oder organischem Füllstoff, beigemengt werden.

Auch kann der Mischung zur Herstellung der Stegschicht 4 vor oder während des Extrudierens ein Anteil von über 10 Gewichtsprozent, besonders bevorzugt 30 - 90 Gewichtsprozent, Mahlmaterial, welches durch Mahlen von Material, welches beispielsweise bereits zur Herstellung von erfindungsgemäßen Kunststoffformteilen oder Folien 1 verwendet wurde bestehen. Die geschäumte Schicht 4 kann beispielsweise zu 100% aus einer Mischung von Mahlmaterial und Füllstoff bestehen. Somit kann die Folie 1 zu einem überwiegenden Teil aus Mahlmaterial bzw. Regranulat hergestellt werden. Es können somit recycelte Kunststoffmaterialien verwendet werden, welche aus demselben Material wie die mit dem erfindungsgemäßen Verfahren hergestellten Folien 1 oder aus anderen Materialien bestehen können.

Die Stegschicht 4 kann in Abhängigkeit von dem Gewicht des Füllmittels 3 in einem Extruder 6 mittels des Treibmittels auf eine vorgebbare Dicke aufgeschäumt werden. Die Deckschicht 5 kann beispielsweise durch Extrudieren von Polymeren 7 in den Extrudern 8 und 9 hergestellt werden. Anstelle von zwei Extrudern 8, 9 könnten auch nur ein Extruder oder mehrere Extruder verwendet werden. Die hier gezeigte Ausführungsform ist beispielsweise für einen dreischichtigen Aufbau der Folie 1 geeignet, wobei die Stegschicht 4 von zwei Deckschichten 5 umgeben sein kann.

Die Deckschicht 5 und die Stegschicht 4 können in einem Feedblock 10 zusammengeführt und durch einen so genannten Kleiderbügelverteiler 11 oder andere geeignete Verteiler bzw. Düsen verteilt werden. Ein für das erfindungsgemäße Verfahren geeigneter Kleiderbügelverteiler bzw. eine geeignete Vorrichtung sind beispielsweise aus der DE 8714160U bekannt geworden.

Gemäß einer anderen Variante der Erfindung, könnte je nach Schichtaufbau der Folie die Stegschicht 4 anstatt geschäumt und gefüllt, wie oben beschrieben auch nur geschäumt sein oder nur gefüllt sein. In diesen Fällen würde entweder nur mindestens ein Treibmittel oder nur mindestens ein Füllmittel anstelle von Füllmittel und Treibmittel vor bzw. während des Extrudierens zugeführt werden. Hierbei könnte die Folie jedoch eine Kombination aus geschäumten und/oder gefüllten Schichten aufweisen.

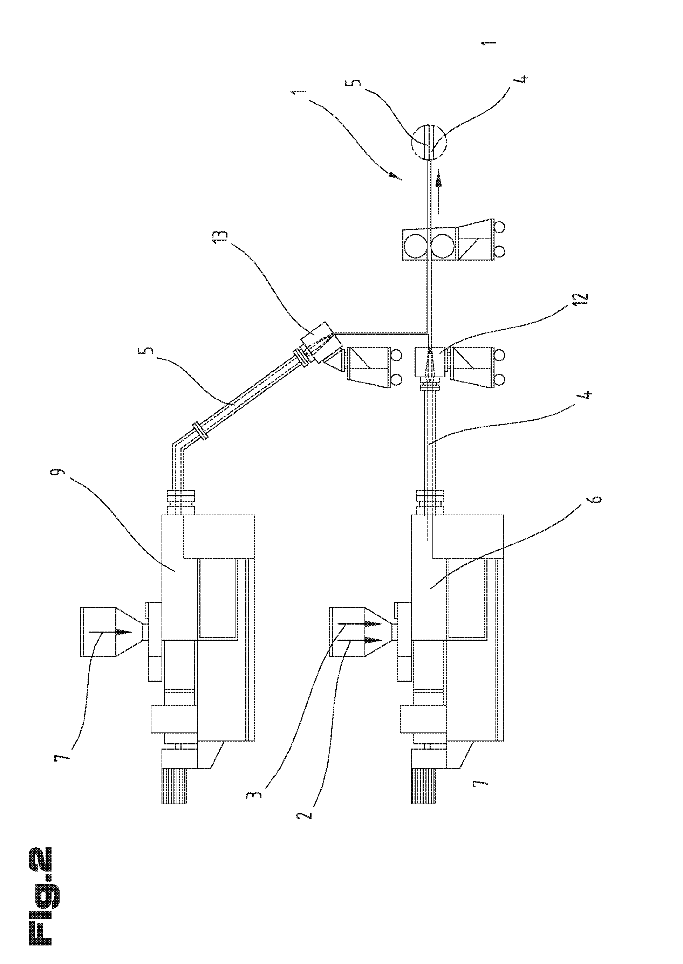

In Fig. 2 ist eine weitere mögliche Vorrichtung zur Durchführung des erfindungsgemäßen Verfahrens dargestellt. Die Deckschicht 5 kann gemäß der dargestellten Ausführungsform mittels einer über oder unter einer Düse 12 zur Ausbringung der Stegschicht 4 vorgesehenen Düse 13 auf die Stegschicht 4 aufgebracht werden. Besonders geeignet sind hierfür beispielsweise Curtain Coating Verfahren.

Bevorzugterweise weist die erfindungsgemäße ein- bzw. mehrlagige, mineralisch u. oder organisch gefüllte und geschäumte Flachfolie 1 eine Gesamtdichte auf, welche einer Flachfolie 1 gleicher oder ähnlicher Polymerzusammensetzung entspricht oder niedriger ist, welche nicht geschäumt und nicht mineralisch und oder organisch gefüllt ist. Erfindungsgemäß kann die Materialzusammensetzung der einzelnen Schichten der Folie 1 so aufeinander abgestimmt sein (ähnliche Viskositäten der einzelnen Polymer- u. oder. Compoundschichten), dass das Gewicht der aus der Folie 1, thermogeformten Produkte gleich oder niedriger ist, als aus ungeschäumten und ungefüllten Folien gleicher oder ähnlicher Polymerzusammensetzung. Der Top Load der aus oben beschriebenen, erfindungsgemäßen Folie 1, thermogeformter Produkte ist gleich oder höher (geringfügig niedriger) als der herkömmlicher Folien ähnlicher Polymerszusammensetzung. Unter Top Load wird hierbei die Belastbarkeit eines symmetrischen Kunststoffformteils, beispielsweise in Form eines Joghurtbechers entlang einer zur Längsmittelachse parallelen Richtung verstanden.

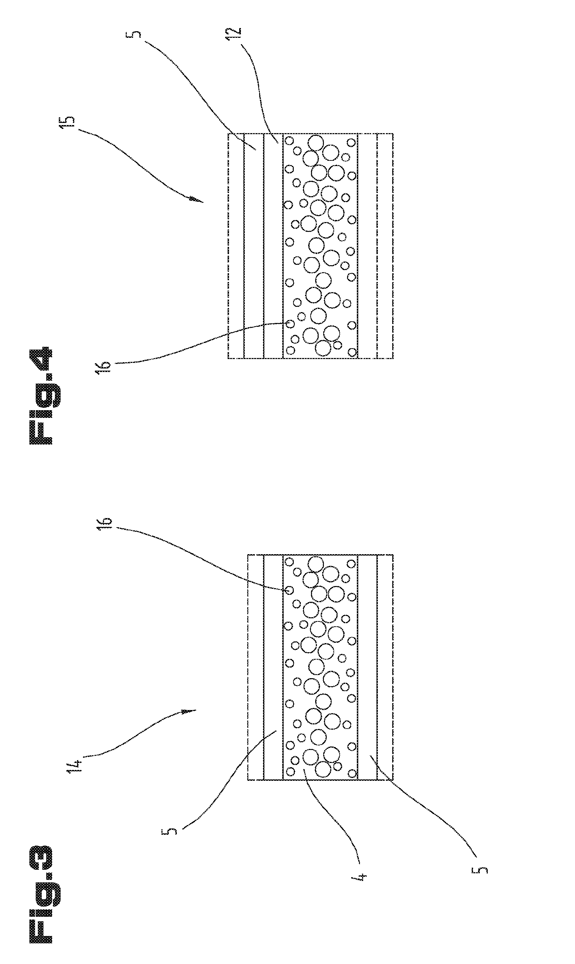

Die Figuren 3 und 4 zeigen unterschiedliche Aufbauten von erfindungsgemäßen Folien 14 und 15.

Wie aus Fig. 3 ersichtlich, kann die Deckschicht 5 in einer Schichtdicke, welche weniger als der Hälfte der Schichtdicke der Stegschicht 4 entspricht, auf die Stegschicht 4 aufgetragen werden. Alternativ kann beispielsweise bei einem 2-lagigen Schichtaufbau aus einer geschäumten 4 und einer ungeschäumten Schicht 5 die nicht geschäumte Schicht 5 auch zwischen 5 - 60 % der gesamten Wandstärke der Folie 14 aufweisen.

Bei einem 3-lagigen Schichtaufbau, aus einer geschäumten Stegschicht 4 und zwei ungeschäumten Deckschichten 5, kann die Schichtenverteilung sowohl symmetrisch als auch unsymmetrisch sein, wobei die beiden nicht geschäumten äußeren Schichten 5 zusammen 5 - 60 % der Gesamtwandstärke aufweisen können.

Da in dem Extruder 6 ein Temperaturgradient vorliegt der von innen nach außen abnimmt, kommt es im Kernbereich der Stegschicht 4 zu einer verstärkten Blasenbildung und Aufschäumung, sodass in einem Querschnitt der Folie 1, wie er in den Fig. 3 und 4 dargestellt ist, im Kernbereich der Stegschicht 4 mehr Hohlräume 16 vorhanden sind, als an deren Rand bzw. in den an die Stegschicht 4 angrenzenden Schichten, beispielsweise der Deckschicht 5. Auch kann die Größe und Dichte der Hohlräume 16 von innen nach außen hin abnehmen.

Die in Fig. 3 und 4 dargestellten Folien 14 und 15 können chemisch und oder physikalisch geschäumte Flachfolien sein, welche mit zumindest einem mineralischen (CaCO₃, Talkum, Dolomit, Zeolith usw.) und/oder zumindest einem nachwachsenden Füll- bzw. Rohstoff (Holzmehl, -fasern, Sisal, Flachs, Hanf usw.) gefüllt sind.

Wie in Fig. 4 dargestellt, kann die Deckschicht 5 auf die Stegschicht 4 mittels eines Klebemittels 17 aufgeklebt sein. Als Treibmittel kann ein in zumindest einer an die Stegschicht 4 angrenzenden Schicht, beispielsweise der Klebemittelschicht 17, lösliches Mittel verwendet werden. So kann als Klebemittel beispielsweise EVA und als Treibmittel Stickstoff verwendet werden, wobei auch andere Kombinationen von Klebern und Treibmitteln verwendet werden können. Das Klebemittel kann beispielsweise mittels eines Extruders erhitzt werden und als Schmelze auf die Stegschicht 4 aufgebracht werden. Hierauf kann dann die Deckschicht 5 gegebenenfalls ebenfalls als Schmelze aufgetragen werden. Die einzelnen Schichten 4, 5, 17 können aber auch aufeinander koextrudiert werden.

Gemäß Fig. 3 ist an beide Hauptoberflächen der Stegschicht 4 je zumindest eine Deckschicht 5 aufgebracht. Zusätzliche weitere Schichten wie funktionale Schichten etc. können nach Bedarf ebenfalls vorhanden sein und sind in den Figuren 3 und 4 strichliert dargestellt. So kann beispielsweise auch eine äußere Antistatik- und/oder, Glanz-, und/oder Siegel und/oder, Haptik- und/oder, Farbschicht aufgebracht werden. Auch kann die Folie 14, 15 eine hydrophobe oder ultraphobe Schicht aufweisen. Weiters kann die Folie 14, 15 sowohl aus ungefüllten geschäumten Einzelschichten als auch gefüllten, nicht geschäumten Einzelschichten bestehen. Darüber hinaus kann die Folie 14, 15 als geschäumte und gefüllte Mono- oder Coexfolie ausgeführt sein, welche eine geschlossene oder zumindest zu 70 % geschlossene Oberfläche aufweist. Auch kann die Oberfläche einer der Schichten, beispielsweise die äußerste Schicht der Folie 14, 15, einer Plasmabehandlung bzw. -bearbeitung unterzogen werden.

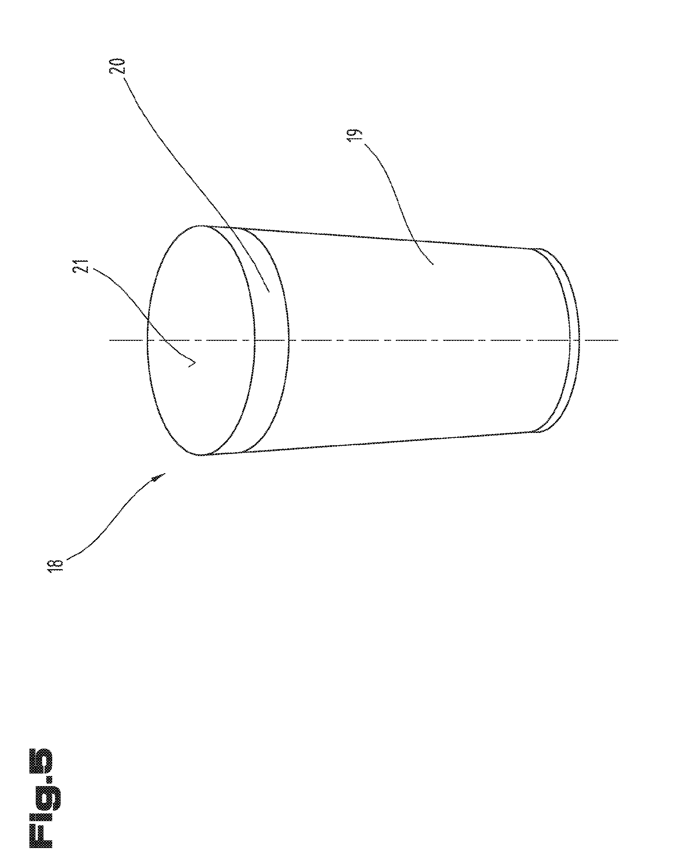

Der in Fig. 5 dargestellte Formteil 18 in Gestalt eines Bechers kann durch Spritzgießen, Thermoformen oder Blasformen hergestellt sein. Der Formteil weist eine Wand mit zumindest einer geschäumten Schicht 4 aus zumindest einem Polymer 2 und/oder Copolymer auf. Der geschäumten Schicht ist, wie oben beschrieben, zumindest ein mineralischer und/oder organischer Füllstoff 3 beigemengt. Der Anteil des Füllstoffes an der geschäumten Schicht beträgt über 10 Gewichtsprozent bezogen auf das Gesamtgewicht der geschäumten Schicht. An die geschäumte Schicht kann zumindest eine Deckschicht anschließen. Alternativ hierzu kann die Wand auch nur aus der zumindest ein Polymer und/oder Copolymer aufweisenden, geschäumten und im Ausmaß von über 10 Gewichtsprozent Füllstoff enthaltenden Schicht gebildet werden.

Im Fall eines durch Blasformen hergestellten Formteils weist die geschäumte Schicht einen Füllstoffanteil von über 30 Gew. % auf.

Der Aufbau der Wand des Formteils kann dem Aufbau der oben beschriebenen und in den Figuren dargestellten Folien entsprechen, sodass an dieser Stelle auf die entsprechenden Ausführungen zu den Folien und die Abbildungen verwiesen wird.

So kann an beide Hauptoberflächen der geschäumten Schicht je zumindest eine Deckschicht anschließen. Auch kann als Füllstoff für die geschäumte Schicht ein Zeolith verwendet werden oder die geschäumte Schicht einen Zeolith als Füllstoff enthalten.

Weiters kann der Formteil einen 3-lagigen Wandaufbau aus einer geschäumten Schicht und zwei daran anschließenden ungeschäumten Deckschichten aufweisen, wobei die geschäumte Schicht zwischen den beiden Deckschichten liegt und die Schichtenverteilung sowohl symmetrisch als auch unsymmetrisch sein kann und die beiden nicht geschäumten äußeren Schichten zusammen 5 - 60 % der Gesamtwandstärke aufweisen.

Insbesondere kann der Formteil mittels des so genannten MuCell® Spritzgießverfahrens hergestellt werden.

Bei dem MuCell® Spritzgießverfahren handelt es sich um einen physikalischen Schäumprozess für Thermoplaste. Hierbei wird ein Gas (entweder N2 oder CO2) unter einem bestimmten Zustand in die Kunststoffschmelze injiziert. Über eine spezielle Mischzone plus die Diffusionseigenschaften des Gases wird beim Dosiervorgang eine Einphasenlösung erzeugt, welche sich unter Druck im Schneckenvorraum sammelt. Durch das in der Kunststoffschmelze gelöste Gas und dem Druckabfall in der Kavität findet beim Einspritzvorgang eine Nukleierung von Zellen statt, mit nachfolgendem Zellwachstum. Das Zellwachstum bewirkt die letzte Ausformung der Kavität, wobei die Höhe der Gewichtsreduzierung über den Dosierweg der Schnecke gesteuert wird. Will man also 10 % des Teilegewichts einsparen, so werden über die Schnecke nur 90 % Kunststoffmasse dosiert. Die Bildung der Einphasenlösung und erheblich höhere Einspritzgeschwindigkeiten als beim Kompakt-Spritzguss sind Voraussetzung für eine homogene, gleichmäßig verteilte Zellstruktur im Bauteil. Die Randschichten bleiben durch den Abkühlprozess an der Werkzeugwand kompakt. Während des Einspritzvorgangs kann eine Nukleierung von Zellen mit nachfolgendem Zellwachstum stattfinden. Der MuCell® Prozess macht es leichter, präzise und hochqualitative Kunststoffteile herzustellen. Die Stückkosten*, die mit dem MuCell® Verfahren erreicht werden, sind bedeutend geringer als bei den konventionellen Spritzgießmethoden. Der Hauptgrund für diese Einsparungen ist, dass im MuCell® Prozess die Verdichtungs- und Nachdruckphase entfällt. In vielen Fällen ist die Qualität der Teile, die sich durch geringen Verzug, dem Wegfall von Einfallstellen, hohe Dimensionsgenauigkeit, bessere Flachheit und hohe Reproduzierbarkeit auszeichnet, besser als bei den herkömmlichen Verfahren.

Alle Teile, die aus semikristallinen Polymeren (PA, PBT und PET) mit Füllstoffen hergestellt werden, reagieren sehr gut mit dem MuCell® Verfahren. Füllstoffe umfassen Mineralien, Talkum, Calciumcarbonat, Fiberglas, Fiberkohlenstoff etc. Hochtemperaturmaterialien, wie Polysulfone und PEEK lassen sich ebenfalls sehr gut mit dem MuCell® Verfahren schäumen. In einigen Fällen ist es möglich, ölgekühlte Werkzeuge mit wassergekühlten Werkzeugen zu ersetzten, da geringere Werkzeugtemperaturen gefahren werden können.

Alternativ zur Herstellung des Kunststoffformteils 18 mittels Spritzguss können auch Tiefziehverfahren oder Blasformungsverfahren mit der Formgebung nachfolgenden Bearbeitungsschritt wie Beschichten, Coaten, Drucken, Sleeven usw. zum Einsatz kommen können. In Zusammenhang mit Blasformungsverfahren ist es besonders vorteilhaft, wenn der Füllstoffanteil der geschäumten Schicht 4 der Folie über 30 Gewichtsprozent beträgt.

Darüber hinaus kann vor oder nach einem Thermoformen eine manschettenartige Ummantelung, beispielsweise eine Kartonummantelung etc., aufgebracht werden, beispielsweise durch ein "In Mold Labeling" Verfahren.

Auch bei Spritzgussverfahren kann eine Ummantelung mittels "In Mold Labeling" Verfahren aufgebracht werden. Die Aufbringung der Ummantelung kann auch nach einem Spritzgießen des Formteils stattfinden.

So kann der Kunststoffformteil 18 eine Manschette 19 aufweisen, welche insbesondere aus einem Zellstoff, Kunststoff und/oder Gewebe gebildet ist. Die Manschette 19 kann in einem Querschnitt einen geschlossenen Ring um die äußerste Schicht 20 des Kunststoffformteils 18 bilden.

Eine Lebensmittelkontaktschicht 21 der Folie bzw. des Kunststoffformteils 18 enthält bevorzugterweise keine mineralischen Füllstoffe außer eventuell einem Farbmasterbatch. Die Mittelschicht (Stegschicht 4) des Wandaufbaus des Kunststoffteils 18 kann jedoch geschäumt und mit mineralischen u. oder organischen Füllstoffen gefüllt sein und die außen liegende Schicht 20, 21 bzw. außen liegenden Schichten (Glanzschicht u. Deckschicht) sind bevorzugt nicht gefüllt und nicht geschäumt.

Weiters kann die Folie 1, 14, 15 bzw. der Kunststoffformteil 18 eine Sperrschicht (EVOH, PA), insbesondere eine gasdichte Sperrschicht, beispielsweise für Sauerstoff oder CO2 aufweisen. Eine Sauerstoffbarriere kann beispielsweise durch Zusatz von plättchenförmigen Füllstoffen und/oder durch Zusatz von 02 Scavengern realisiert werden.

Es ist auch darauf zu achten, dass die verwendeten Füllstoffe für Lebensmittelfolien und Lebensmittelverpackungen den entsprechenden gesetzlichen Bestimmungen genügen. Derartige Füllstoffe sind z.B. modifizierte Schichtsilikate. Sperrschichten in Lebensmittelfolien und Lebensmittelverpackungen müssen ebenfalls den einschlägigen Bestimmungen genügen. Beispiele für Sperrschichten sind: Polyamid/Polyethylen (Polyamid für Schinken und Wurstwaren), PET-Folie mit Aluminiumoxidbedampfung (Kaffee und Kakao), Polyamid/Ethylenvinylalkohol/Polyethylen, Polyvinylidenchlorid. Ein wichtiger Aspekt ist ebenfalls die biologische Abbaubarkeit der Folien. Bevorzugt wird daher eine biologisch abbaubare und kompostierbare, ein- oder mehrschichtige Folie eingesetzt, die ein oder mehrere biologisch abbaubare und kompostierbare Polymere umfasst. Sie kann ein Absorbens zur Bindung gasförmiger Geruchs-und Aromastoffe enthalten.

Weiters kann der petrochemische Anteil der Folien zum Teil oder zur Gänze durch Biopolymere ersetzt werden, welche auf nachwachsende Rohstoffe basieren. Weiters sind auch Polymerblends aus Standardpolymeren und Biopolymeren vorgesehen.

Darüber hinaus kann auch eine mit einem Füllinhalt des Kunststoffformteils 18 in Berührung kommende Schicht 21 als Milchsäure beständige Schicht ausgebildet sein. Bevorzugterweise ist der Formteil 18 als Becher, insbesondere als Joghurtbecher, ausgebildet.

Abschließend sei festgehalten, dass die Ausführungsbeispiele lediglich mögliche Ausführungsvarianten der erfindungsgemäßen Lösung zeigen, wobei die Erfindung nicht auf die speziell dargestellten Ausführungsvarianten eingeschränkt ist. Insbesondere sind auch Kombinationen der einzelnen Ausführungsvarianten untereinander möglich, wobei diese Variationsmöglichkeiten aufgrund der Lehre zum technischen Handeln der gegenständlichen Erfindung im Können des auf diesem technischen Gebiet tätigen Fachmannes liegen. Es sind auch sämtliche denkbaren Ausführungsvarianten, die den der Erfindung zugrunde liegenden Lösungsgedanken verwirklichen und nicht explizit beschrieben bzw. dargestellt oder durch Kombinationen einzelner Details der dargestellten und beschriebenen Ausführungsvarianten möglich sind, vom Schutzumfang mit umfasst. Ebenso erstreckt sich der Schutz auch auf die einzelnen Komponenten der erfindungsgemäßen Vorrichtung, soweit diese für sich genommen wesentlich zur Realisierung der Erfindung sind.

### Bezugszeichenaufstellung

- Kunststofffolie: 1
- Polymer: 2
- Füllmittel: 3
- Stegschicht: 4
- Deckschicht: 5
- Extruder: 6
- Polymer: 7
- Extruder: 8
- Extruder: 9
- Feedblock: 10
- Kleiderbügelverteiler: 11
- Düse: 12
- Düse: 13
- Folien: 14,15
- Hohlräume: 16
- Klebemittelschicht: 17
- Kunststoffformteil: 18
- Manschette: 19
- Schicht: 20
- Lebensmittelkontaktschicht: 21

## Patentansprüche

1. Formteil (18), **dadurch gekennzeichnet, dass** er eine Wand mit zumindest einer geschäumten Schicht aus zumindest einem Polymer (2) und/oder Copolymer aufweist, und der geschäumten Schicht zumindest ein mineralischer und/oder organischer Füllstoff (3) beigemengt ist, wobei der Anteil des Füllstoffes an der geschäumten Schicht über 10 Gewichtsprozent bezogen auf das Gesamtgewicht der geschäumten Schicht beträgt und an die geschäumte Schicht zumindest eine Deckschicht anschließt, oder dass die Wand nur aus der zumindest ein Polymer und/oder Copolymer aufweisenden, geschäumten und im Ausmaß von über 10 Gewichtsprozent Füllstoff enthaltenden Schicht gebildet wird, wobei die geschäumte Schicht im Fall eines durch Blasformen hergestellten Formteils einen Füllstoffanteil von über 30 Gew. % aufweist.

2. Formteil nach Anspruch 1, **dadurch gekennzeichnet, dass** er durch Spritzgießen, Thermoformen oder Blasformen hergestellt ist.

3. Formteil nach Anspruch 1 oder 2, **dadurch gekennzeichnet, dass** er eine eine äußere Schicht (21) zumindest abschnittsweise umgebenden Manschette (19) aufweist, welche insbesondere aus einem Zellstoff, Kunststoff und/oder Gewebe und/oder Biopolymer gebildet ist.

4. Formteil nach Anspruch 3, **dadurch gekennzeichnet, dass** die Manschette (19) in einem Querschnitt einen geschlossenen Ring um den Formteil (18) bildet.

5. Formteil nach einem der Ansprüche 1 bis 4, **dadurch gekennzeichnet, dass** zumindest eine Barriereschicht, beispielsweise für Sauerstoff, vorgesehen ist.

6. Formteil nach einem der Ansprüche 1 bis 5, **dadurch gekennzeichnet, dass** an beide Hauptoberflächen der geschäumten Schicht (4) je zumindest eine Deckschicht (5) anschließt.

7. Formteil nach einem der Ansprüche 1 bis 6, **dadurch gekennzeichnet, dass** er als Becher, insbesondere als Joghurtbecher, ausgebildet ist.

8. Formteil nach einem der Ansprüche 1 bis 7, **dadurch gekennzeichnet, dass** der Füllstoff ein Zeolith ist und/oder ein Zeolith enthält.

9. Formteil nach einem der Ansprüche 1 bis 8, **dadurch gekennzeichnet, dass** es einen 3-lagigen Wandaufbau aus einer geschäumten Schicht und zwei daran anschließenden ungeschäumten Deckschichten aufweist, wobei die geschäumte Schicht zwischen den beiden Deckschichten liegt und die Schichtenverteilung sowohl symmetrisch als auch unsymmetrisch sein kann und die beiden nicht geschäumten äußeren Schichten zusammen 5 - 60 % der Gesamtwandstärke aufweisen.

10. Formteil nach Anspruch 9, **dadurch gekennzeichnet, dass** eine an die geschäumte Schicht anschließende Deckschicht eine Lebensmittelkontaktschicht ist und keine mineralischen Füllstoffe außer gegebenenfalls einem Farbmasterbatch oder nur zum direkten Lebensmittelkontakt geeignete Füllstoffe enthält.
